Europäisches Patentamt

European Patent Office

Office européen des brevets

(19)

(11) **EP 1 031 852 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.⁷: **G01S 7/497**, G01S 17/93, G01S 7/40, G01S 7/481, G08G 1/16

(21) Anmeldenummer: **00101216.0**

(22) Anmeldetag: **21.01.2000**

(54) **Vorrichtung und Verfahren zur Justierung eines Abstandsmessgeräts**

Method and device for adjusting a distance measuring apparatus

Méthode et dispositif pour le réglage d'un dispositif pour mesurer des distances

(84) Benannte Vertragsstaaten:
**AT BE CH CY DE DK ES FI FR GB GR IE IT LI LU MC NL PT SE**

(30) Priorität: **22.02.1999 DE 19907592**

(43) Veröffentlichungstag der Anmeldung:
**30.08.2000 Patentblatt 2000/35**

(73) Patentinhaber: **Volkswagen Aktiengesellschaft 38436 Wolfsburg (DE)**

(72) Erfinder:
• **Raschke, Holger 38448 Wolfsburg (DE)**
• **Kamp, Birger, Dr. 38104 Braunschweig (DE)**

(56) Entgegenhaltungen:
**DE-A- 19 536 000       DE-A- 19 636 520
DE-C- 19 707 591       US-A- 5 078 490**

**Beschreibung**

Die vorliegende Erfindung betrifft eine Vorrichtung zur Justierung eines Abstandsmeßgeräts sowie ein mit dieser Vorrichtung durchgeführtes Verfahren zur Justierung eines Abstandsmeßgeräts, insbesondere eine Vorrichtung zur Justierung eines Abstandsmeßgeräts, das in dem Vorderwagen eines Kraftfahrzeuges montiert ist und das von einem von ihm umfaßten Sendekopf ausgesendete und an Objekten im Bereich vor dem Kraftfahrzeug zumindest teilweise reflektierte elektromagnetische Wellen zur Abstandsmessung detektieren kann, umfassend optische Meßmittel, die die Ausrichtung des Sendekopfs bezüglich der Fahrachse des Kraftfahrzeuges erfassen können, sowie Einstellmittel, die die Ausrichtung des Sendekopfes bezüglich der Fahrachse des Kraftfahrzeuges verändern können.

Moderne Fahrzeuge werden in immer stärker werdendem Maß mit Systemen ausgerüstet, die die Sicherheit erhöhen. Ein Baustein in diesem Sicherheitskonzept ist die aktive Abstandsregelung. Dabei werden die Geschwindigkeit und der Abstand zum vorausfahrenden Fahrzeug automatisch ermittelt. Die Überwachung des Abstandes erfolgt ständig, bei Unterschreiten des Mindestabstandes wird der Fahrer gewarnt und bei Bedarf das Fahrzeug abgebremst. Das System muß dabei in der Lage sein, zwischen fahrenden, entgegenkommenden und ortsfesten Objekten zu unterscheiden.

Eine technische Lösung zur Überwachung von Abstand und Geschwindigkeit ist der Einsatz eines als Radar-Sensors ausgeführten Abstandsmeßgeräts, das im Vorderwagen des Fahrzeuges eingebaut ist. Der Radar sendet Mikrowellenstrahlung aus, erfaßt die zurückgeworfenen Echosignale von Hindernissen und vorausfahrenden Fahrzeugen und wertet die Informationen aus.

Es ist notwendig den Sendekopf eines Radar-Sensors korrekt zur Fahrachse des Fahrzeuges auszurichten. Die erstmalige Justierung erfolgt im Produktionsbetrieb zum Ende des Produktionsablaufes. Sie ist unbedingt erforderlich, um die einwandfreie Funktion und optimale Reichweite des Radar-Sensors gewährleisten zu können.

Es ist beispielsweise aus der DE 195 36 000 A1 bekannt, zur Justierung des Radar-Sensors ein Radarziel zu verwenden, welches die Situation im Straßenverkehr simuliert und dem Radar ein Objekt vorspiegelt. Vor dem Radar wird in die Solllage der Radarachse ein Radarziel aufgebaut. Die Solllage ergibt sich aus einer Geraden, die von dem Radar-Sensor parallel zur Fahrachse ausgeht. Während der Einstellarbeiten sendet der Radar-Sensor und empfängt die reflektierten Signale. Die korrekte Winkelstellung ergibt sich aus dem Maximum der reflektierten Radarsignale. Die Stärke des Radarsignals läßt sich über die Datenschnittstelle des Radar-Sensors auslesen. Im Produktionsbereich kommt die Verwendung eines aktiven Radarzieles infolge der permanenten Mikrowellenstrahlung nicht in Frage. Eine mögliche Gefährdung der dort tätigen Mitarbeiter wird zwar vom Hersteller verneint, jedoch die Ungefährlichkeit nicht garantiert. Dabei ist zu bedenken, daß sich die Einstellschrauben für die Winkellage direkt neben dem Sendekopf befinden. Die Hände des Mitarbeiters, der die Einstellschrauben bedient, befinden sich also in der unmittelbaren Nähe des Sendekopfes, beispielsweise in einer Entfernung von wenigen Zentimetern, und damit im Bereich der stärksten Strahlungsenergie.

Eine Vorrichtung der eingangs genannten Art verwendet einen auf dem Sendekopf angebrachten Laser, der die Radarachse markiert. Hier ist eine Vorrichtung erforderlich, um den Laser auf dem Gehäuse des Radars zu befestigen. Diese Vorrichtung besteht im einfachsten Fäll aus einer Bohrung, in die der Ziellaser für die Prüfung aufgesteckt wird. Auch diese Vorrichtung beziehungsweise dieses Verfahren weisen eine Reihe von Nachteilen auf. So geht die Montage des Ziellasers auf dem Sendekopf des Radars zu Lasten der Fertigungszeit und ist damit kostenintensiv. Das Anbringen und Entfernen muß sorgfältig geschehen, damit Beschädigungen am Laser und am Radar-Sensor vermieden werden. Eine Dejustierung des Radar-Sensor ist ebenfalls nicht zulässig. Zudem liefert ein derartiger Ziellaser nicht direkt die Winkellage des Radar-Sensors. Der Punkt (Laserfleck), der den Strahl des Ziellasers z.B. auf einen Anzeigeschirm markiert, genügt allein nicht zur Ermittlung der Winkellage. Dazu ist ein weiterer Punkt des Laserstrahls erforderlich.

Aus der DE 196 36 520 A1 ist ferner ein Prüfgerät für Fahrzeugscheinwerfer bekannt. Dieses Prüfgerät ist mit einer Vorrichtung zur Justierung des Prüfgeräts im Abstand vor einem Kraftfahrzeug versehen, welche eine Laserlichtquelle umfasst, deren auf der optischen Achse des Prüfgeräts verlaufender Laserstrahl auf den Scheinwerfer gerichtet wird, um anhand des auf dem Scheinwerfer erkennbaren Laserlichtpunktes die Justierung des Prüfgeräts vor dem Kraftfahrzeug überprüfen zu können.

Das der vorliegenden Erfindung zugrundeliegende Problem ist die Schaffung einer Vorrichtung und eines Verfahrens der eingangs genannten Art, die eine effektive Justierung eines Abstandsmeßgeräts ermöglichen.

Dies wird erfindungsgemäß durch eine Vorrichtung zur Justierung eines Abstandsmeßgeräts mit den Merkmalen des Anspruchs 1 erzielt. Weitere vorteilhafte Ausführungsformen lassen sich den Unteransprüchen entnehmen.

Erfindungsgemäß können die optischen Meßmittel eine zumindest teilweise reflektierende Fläche des Abstandsmessgeräts, eine Lichtquelle, deren Licht auf die zumindest teilweise reflektierende Fläche gerichtet werden kann, und ein Anzeigeelement, auf dem das von der Lichtquelle ausgesandte und von der zumindest teilweise reflektierenden Fläche reflektierte Licht geeignet erfaßt werden kann, um die Ausrichtung des Sendekopfs bezüglich der Fahrachse des Kraftfahrzeuges erfassen zu können, umfassen. Durch die Anordnung der zumindest teilweise reflektierenden Fläche an dem Abstandsmeßgerät entfällt die Montage und Demontage des Ziellasers an dem Abstandsmeßgerät, wodurch die aus dem Stand der Technik bekannten Probleme entfallen. Hierbei kann die zumindest teilweise reflektierende Fläche vorzugsweise an dem Sendekopf angeordnet sein.

Anstelle des beispielsweise als Schirm ausgestalteten Anzeigeelements, auf dem das von der Lichtquelle ausgesandte und von der zumindest teilweise reflektierenden Fläche reflektierte Licht auftreffen kann, kann beispielsweise auch eine Mattscheibe Verwendung finden.

Weiterhin können die optischen Meßmittel eine vorzugsweise als Kamera ausgeführte Erfassungseinheit umfassen, die entweder das Abbild des Schirms oder aber das von der Lichtquelle ausgesandte und von der zumindest teilweise reflektierenden Fläche reflektierte Licht erfassen kann. Hierbei kann die Erfassungseinheit mit einem Bildverarbeitungssystem verbunden sein. Die Vorrichtung beziehungsweise das Verfahren eignen sich prinzipiell für Einstellarbeiten am Radar-Sensor. Der auf dem Schirm abgebildete Laserfleck des Ziellasers muß durch Verstellen der Winkellage am Sensor in die Sollposition auf dem Schirm gebracht werden. Die Erweiterung zu einer automatisierten Einstellung ist möglich mit einer modifizierten Anordnung von Schirmfläche und Lichtquelle, sowie dem Einsatz einer Kamera und eines Bildverarbeitungssystems. Mit der Kamera wird der Schirm mit dem Laserfleck aufgenommen und dessen Position vermessen. Die Differenzbildung von Soll- und Istposition liefert die Richtung der Einstellung. Bei einer manuellen Einstellung kann dem Mitarbeiter über geeignete Signale angezeigt werden, in welche Richtung er die Schrauben drehen muß. Bei einer weitergehenden Automatisierung steuert das System die Antriebsmotoren in den Einstellschraubern an. Der Mitarbeiter führt die Einstellschrauber lediglich in die entsprechenden Einstellvorrichtung am Radar-Sensor ein.

Vorteilhafterweise kann als Lichtquelle ein Laser Verwendung finden. Hierzu kann der Laser auf der von der zumindest teilweise reflektierenden Fläche abgewandten Seite des Schirms angeordnet sein, wobei der Schirm eine Öffnung aufweist, durch die der von dem Laser ausgehende Strahl in Richtung auf die zumindest teilweise reflektierenden Fläche hindurch treten kann.

Alternativ dazu kann als Lichtquelle eine beleuchtete Marke Verwendung finden.

Gemäß einer bevorzugten Ausführungsform der vorliegenden Erfindung umfaßt die Vorrichtung einen Strahlteiler, durch den das von der Lichtquelle ausgehende Licht auf seinem Weg zu der zumindest teilweise reflektierenden Fläche zumindest teilweise hindurch treten kann, wobei das von dieser Fläche reflektierte Licht von dem Strahlteiler zumindest teilweise in Richtung auf den Schirm und/oder die Erfassungseinheit reflektiert wird.

Gemäß einer bevorzugten Ausführungsform der vorliegenden Erfindung kann die Vorrichtung ein beispielsweise als Sammellinse ausgeführtes Abbildungselement umfassen, durch das das von der Lichtquelle ausgehende Licht vor und/oder nach der Reflexion an der zumindest teilweise reflektierenden Fläche hindurch tritt. Hierbei können der Schirm oder die Erfassungseinheit in der von der zumindest teilweise reflektierenden Fläche abgewandten Brennebene der Sammellinse angeordnet sein. Vorzugsweise sind der Schirm oder die Erfassungseinheit senkrecht zu der optischer Achse der Sammellinse oder eines optischen Systems aus Sammellinse und Strahlteiler angeordnet. Hierbei erweist sich als vorteilhaft, daß die Entfernung zwischen der Meßebene und dem Sendekopf des Abstandsmeßgeräts nicht bekannt sein muß. Dies wird erreicht durch die Verwendung des zusätzlichen als Sammellinse ausgeführten Abbildungselements und die Anordnung der Meßebene in dessen Brennebene.

Das erfindungsgemäße Verfahren zur Justierung eines Abstandsmeßgeräts ist durch folgende Verfahrensschritte gekennzeichnet:

Die Lage eines der optimalen Justierung des Abstandsmeßgeräts entsprechenden Auftreffpunktes (Sollposition) des von der Lichtquelle ausgehenden und von der zumindest teilweise reflektierenden Fläche reflektierten Lichts in einer vorzugsweise durch den Schirm gegebenen Meßebene wird berechnet; der tatsächliche Auftreffpunkt (Istposition) des von der Lichtquelle ausgehenden und von der zumindest teilweise reflektierenden Fläche reflektierten Lichts in der vorzugsweise durch den Schirm gegebenen Meßebene wird ermittelt; entsprechend der Abweichung von Istposition zur Sollposition werden die Einstellmittel zur Verkleinerung der Abweichung betätigt, bis diese den gewünschten Anforderungen genügt. Hierbei kann zur Berechnung der Sollposition ein zuvor ermittelter Korrekturwinkel verwendet werden, der dem Winkel zwischen der Normalen auf der zumindest teilweise reflektierenden Fläche und der Achse der Abstrahlrichtung des Sendekopfes entspricht. Weiterhin kann in die Berechnung der Sollposition ein zuvor ermittelter Fahrtrichtungswinkel eingehen, der dem Winkel zwischen der tatsächlichen Fahrachse des Kraftfahrzeugs und einer Sollrichtung der Fahrachse des Kraftfahrzeugs innerhalb der Vorrichtung entspricht, wobei diese Sollrichtung vorzugsweise durch die Richtung gegeben ist, aus der das von der Lichtquelle ausgehende Licht auf die zumindest teilweise reflektierende Fläche auftrifft.

Die Justierung des Radar-Sensors hat zum Ziel, die Abstrahlrichtung des Sendekopfes parallel zur Fahrachse auszurichten. Die Fahrachse beschreibt die Bewegungsrichtung des Fahrzeuges und kann aus den Spurwerten der Räder berechnet werden. Die Spurwerte können mit Hilfe einer Achsgeometrie-Meßanlage gemessen werden. Dabei ist es unerheblich, ob die Vorrichtung zur Justierung ein Bestandteil einer Achsgeometrie-Meßanlage ist, oder ob das Fahrzeug mit bekannter Achsgeometrie für die Justierung in oder zu einer separaten Vorrichtung entsprechend positioniert und/oder ausgerichtet wird. Wird eine Achsgeometrie-Meßanlage in Verbindung mit der Vorrichtung zur Justierung eingesetzt, sollte gewährleistet sein, daß die Vorrichtung zur Achsgeometrie-Meßanlage kalibriert ist. Die Winkellage der Fahrachse muß in jedem Fall auf die Vorrichtung zur Justierung bezogen sein. Falls die Prüfstandsachse der Achsgeometrie-Meßanlage nicht zur Achse der Vorrichtung zur Justierung fluchtet, ist ein Korrekturwinkel einzuführen, der den Versatz zwischen Vorrichtung zur Justierung und Achsgeometrie-Meßanlage beschreibt.

Mit der erfindungsgemäßen Vorrichtung beziehungsweise dem erfindungsgemäßen Verfahren läßt sich die Winkellage des Radar-Sensors berührungslos vermessen. Es braucht kein Ziellaser oder eine andere Hilfseinrichtung während der Messung auf dem Radar-Sensor befestigt werden, wenn dieser mit einer spiegelnden beziehungsweise zumindest teilweise reflektierenden Oberfläche ausgestattet ist. Der manuelle Eingriff beschränkt sich auf die Einstellarbeiten, d.h. die Betätigung der Einstellschrauben oder Einstellschrauber, mit denen die Winkellage verstellt werden kann. Das Verfahren ist prinzipiell für den Produktions- und den Werkstattbetrieb geeignet. Es bietet dem Mitarbeiter, der die Einstellung vornimmt, Anhaltswerte bzgl. der Einstellrichtung - durch den direkten sichtbaren Vergleich von Soll- und Istposition.

Auf einem Schirm kann sofort die Abweichung zwischen Soll- und Istposition sichtbar gemacht werden. Ein einfaches Verfahren zur Festlegung der Sollposition ist es, die errechneten Koordinaten auf dem Schirm zu markieren und den Laserfleck oder Lichtfleck durch Ausrichten des Radar-Sensors in diese Position zu bringen.

Kann ein konstanter Abstand zwischen Radar-Sensor und Schirm eingehalten werden, ist eine Skalenteilung in Grad eine zusätzliche Vereinfachung. Der einzustellende Wert, die Sollposition für den Laserfleck oder Lichtfleck, ist dann einfach als Summe des zuvor ermittelten Korrekturwinkels und eines zuvor ermittelten Fahrtrichtungswinkels an der Skala abzulesen.

Vorteilhafterweise können orthogonal angeordnete Skalen auf dem Schirm die Einstellung erleichtern, d.h. das Auffinden der Sollposition des Laserflecks oder Lichtflecks. Skalen mit entsprechender Teilung unterstützen die Einstellarbeiten.

Auch bei einer nicht genauen Vermessung des Abstandes zwischen Schirm und Radar-Sensor, fällt die erzielbare Einstellgenauigkeit hinreichend genau aus. Eine Ungenauigkeit in axialer Richtung (d.h. entlang der Prüfstandsachse) hat eine vertretbare Auswirkung auf die Einstellgenauigkeit. Diese relative Unempfindlichkeit gegenüber der axialen Positionierung des Fahrzeuges beziehungsweise dem Abstand zwischen Schirm und Radar-Sensor erweist sich als vorteilhaft.

Die Einstellgenauigkeit kann noch weiter verbessert werden, indem die Schiefstellung des Fahrzeuges im Prüfstand korrigiert wird. Die Fahrachse ist hierzu möglichst parallel zur Prüfstandsachse bzw. zur Laserachse auszurichten.

Die höchste Genauigkeit läßt sich erzielen, wenn die Summe des Korrekturwinkels und des Fahrtrichtungswinkels gegen Null strebt. Die Fahrachse ist dann so ausgerichtet, daß die Normale auf dem Spiegel zur Laserachse fluchtet beziehungsweise parallel zu dieser ist. Dieses Ausrichten kann durch Drehen des Fahrzeuges in der Prüfanlage oder durch Verdrehen der Vorrichtung beziehungsweise der Laserachse realisiert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1    eine Prinzipskizze der Meßanordnung einer Ausführungsform der vorliegenden Erfindung;

Fig. 2    eine Prinzipskizze zur Verdeutlichung der Ausrichtung der Sendekeule des Radar-Sensors zur Fahrachse des Fahrzeugs;

Fig. 3    eine Prinzipskizze zur Verdeutlichung der Winkel bei einer Meßanordnung gemäß Fig. 1;

Fig. 4    eine Prinzipskizze zur Verdeutlichung des Verfahrens zur Justierung mittels einer Vorrichtung gemäß Fig. 1;

Fig. 5    eine Prinzipskizze der Meßanordnung einer weiteren Ausführungsform der vorliegenden Erfindung;

Fig. 6    eine Prinzipskizze der Meßanordnung einer weiteren Ausführungsform der vorliegenden Erfindung;

Fig. 7    eine Prinzipskizze der Meßanordnung einer weiteren Ausführungsform der vorliegenden Erfindung;

Fig. 8    eine Prinzipskizze zur Verdeutlichung der Winkel bei einer Meßanordnung gemäß Fig. 7;

Fig. 9    eine Prinzipskizze der in der Vorrichtung gemäß Fig. 7 verwendeten Lichtquelle;

Fig. 10   eine Prinzipskizze der Meßanordnung einer weiteren Ausführungsform der vorliegenden Erfindung;

Fig. 11    eine Prinzipskizze der Meßanordnung einer weiteren Ausführungsform der vorliegenden Erfindung.

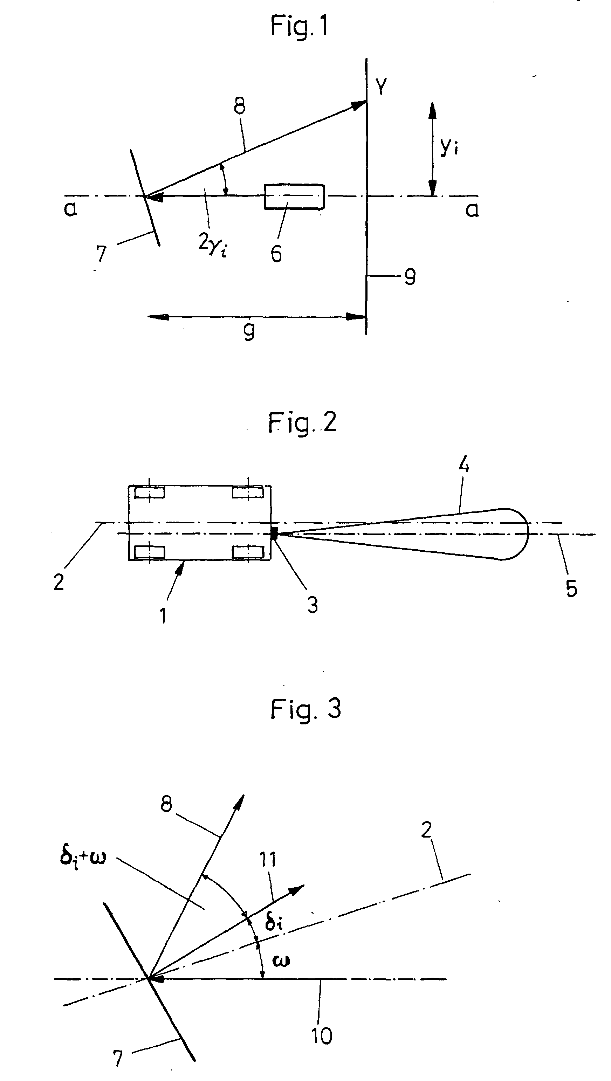

Zuerst wird auf Fig. 2 Bezug genommen. Die korrekte Winkellage des Radar-Sensors 3 des Abstandsmeßgeräts ist dann gegeben, wenn die Sendekeule 4 beziehungsweise die damit verknüpfte Radarachse 5 mit hoher Genauigkeit parallel zur Fahrachse 2 des Kraftfahrzeugs 1 ausgerichtet wird. Die Winkellage des Radar-Sensors 3 läßt sich in der Regel mit zwei als Einstellschrauben ausgeführten Einstellmitteln variieren. Bei entsprechender konstruktiver Ausführung der Einstellschrauben lassen sich Seiten- und Höhenwinkel rückwirkungsfrei, d.h. unabhängig voneinander einstellen.

Die in Fig. 1 abgebildete Ausführungsform einer erfindungsgemäßen Vorrichtung arbeitet mit einem externen Laser 6. Der Radar-Sensor 3 muß mit einer zumindest teilweise reflektierenden Fläche ausgestattet sein, die im nachfolgenden als Spiegel 7 bezeichnet wird.

Vor dem Fahrzeug befindet sich der Laser 6, der so ausgerichtet ist, daß er den Spiegel 7 beleuchtet. Lotrecht zur Laserachse a-a ist ein Schirm 9 angeordnet. Der Schirm 9 befindet sich im Abstand g zum Radar-Sensor vor dem Fahrzeug. Der auf den Spiegel 7 einfallende Strahl wird gemäß dem Reflexionsgesetz unter dem gleichen Winkel $\gamma_i$ zur Normalen 11 auf dem Spiegel 7 reflektiert. Dabei liegen der einfallende und der reflektierte Laserstrahl 8, sowie die Normale 11 auf dem Spiegel in einer Ebene. Das Prinzip wird im folgenden anhand einer ebenen Darstellung erläutert. Die räumliche Ausführung wird von diesen grundsätzlichen Betrachtungen mit umfaßt.

Der am Spiegel 7 reflektierte Laserstrahl 8 trifft den Schirm 9 im Punkt Y. Zweckmäßiger Weise ist ein Laser 6 zu verwenden, der mit einer sichtbaren Wellenlänge arbeitet. Mit seiner geringen Strahldivergenz wirkt er wie eine nahezu punktförmige Lichtquelle, so daß auf dem Schirm 9 im Punkt Y ein deutlich erkennbarer Lichtfleck erscheint. Der Abstand $y_i$ zwischen Punkt Y und der Laserachse a-a auf dem Schirm 9 liefert die Orientierung des Spiegels 7:

$$y_i = g \cdot \tan(2\gamma_i). \qquad \text{(Gleichung 1)}$$

Bei der Messung sind die horizontale und vertikale Komponente des Abstandes $y_i$ zu berücksichtigen. Dies wird durch den Index i dargestellt. Mit Hilfe der horizontalen Komponente des Abstands $y_{hor}$ wird der Seitenwinkel und mit der vertikalen Komponente des Abstandes $y_{ver}$ der Höhenwinkel des Radar-Sensors 3 eingestellt.

Der Winkel $\omega$ gibt die Fahrtrichtung des Fahrzeuges 1, d.h. seine Fahrachse 2 in der Anlage an. Er setzt sich zusammen aus der Fahrzeug-Schiefstellung und dem Fahrachswinkel (nach DIN 70027).

Ein weiteres Winkelpaar muß für die Einstellarbeiten bekannt sein. Falls die Radarachse 5 mit dem Gehäuse des Sendekopfes nicht orthogonal verknüpft ist (z.B. infolge Fertigungstoleranzen), müssen zusätzlich die Korrekturwinkel $\delta_i$ (horizontal und vertikal) berücksichtigt werden. Die Korrekturwinkel $\delta_i$ beschreiben die Winkelabweichung zwischen der Normalen 11 auf dem Spiegel 7, der auf dem Gehäuse des Radar-Sensors 3 angebracht ist, und der Radarachse 5.

Wie in Fig. 3 dargestellt ist, fällt der Laserstrahl unter der $\delta_i + \omega$ zur Normalen 11 auf dem Spiegel 7 auf dessen Oberfläche. Unter dem gleichen Winkel wird der Laserstrahl reflektiert und trifft entsprechend Gleichung 1 im Punkt Y auf den Schirm 9.

$$y_i = g \cdot \tan(2(\delta_i + \omega)). \qquad \text{(Gleichung 2)}$$

Diese Beziehung gilt für die Einstellung des horizontalen Seitenwinkels. Für die Einstellung des Höhenwinkels entfällt der Fahrtrichtungswinkel $\omega$.

Bei der Vorrichtung gemäß Fig. 1 müssen für die Einstellung der korrekten Winkellage bekannt sein:

- Abstand g (zwischen Schirm 9 und Spiegel 7),
- Korrekturwinkel $\delta_i$ ,
- Fahrtrichtungswinkel $\omega$.

Der Abstand g wird in der Vorrichtung gemessen. Der Fahrtrichtungswinkel $\omega$ wird von der Achsgeometrie-Meßanlage geliefert. Die Korrekturwinkel $\delta_i$ können z.B. mit Hilfe einer Datenstation ausgelesen werden. Aus diesen Werten läßt sich der Punkt Y auf dem Schirm 9 berechnen, der die Sollposition 14 des Laserflecks (des reflektierten Strahls 8) auf dem Schirm 9 markiert. Die Lage ist durch den Schnittpunkt der horizontalen und vertikalen Komponente von $y_i$ gegeben.

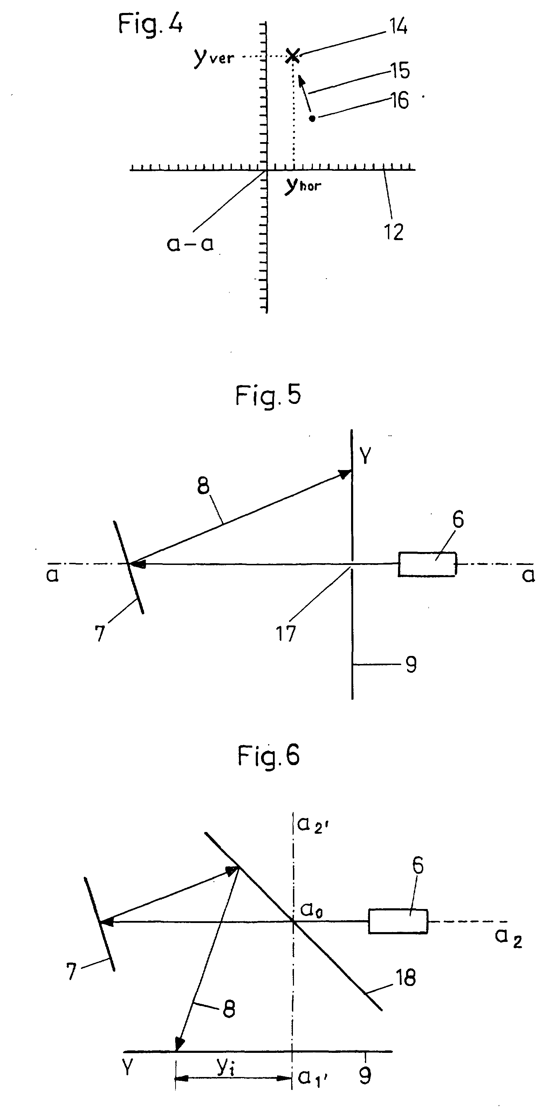

Zweckmäßigerweise ist der Schirm 9 mit einer orthogonal angeordneten Skala 12, 13 versehen, deren Nullpunkt in der Laserachse a-a liegt (Fig. 4). Die Position des Laserflecks kann dann sofort abgelesen und entsprechend korrigiert werden. Die Skala 12, 13 kann z.B. mit einer metrischen Teilung versehen werden.

Die Einstellarbeiten beschränken sich darauf, den die Istposition 16 kennzeichnenden Laserfleck auf die markierte Schirmkoordinate Y in die Sollposition 14 zu bringen. Dies erfolgt, wie schon beschrieben, durch Verstellen der Winkellage des Radar-Sensors 3 in Einstellrichtung 15.

Wenn der Abstand g zwischen Spiegel 7 und Schirm 9 durch eine geeignete Vorrichtung bei allen Messungen konstant gehalten werden kann, bietet sich eine Teilung in Grad an. In diesem Fall entfällt die Berechnung des Punktes Y nach Gleichung 2. Die Winkelbeziehung ist in der Skala 12, 13 bereits berücksichtigt, wobei die Beschriftung der Skala 12, 13 als Winkel $\gamma_i$ erfolgt.

$$\gamma_i = 2(\delta_i + \omega). \qquad \text{(Gleichung 3)}$$

Die Sollposition 14 für den Laserfleck ist dann an der $\delta_i+\omega$ an der Skala 12, 13 abzulesen. Die Forderung nach einem konstanten Abstand g läßt sich durch geeignete Positionierhilfen, z.B. Anschläge oder Radmulden, gewährleisten.

Ein Nachteil der Ausführungsform gemäß Fig. 1 ist die Anordnung des Lasers 6 vor dem Schirm 9. Diese Anordnung hat den Nachteil, daß der vor dem Schirm 9 befindliche Laser 6 eine Abschattung bewirkt und kleine Reflexionswinkel nicht auf dem Schirm 9 erfaßt werden können.

Der Effekt der Abschattung läßt sich vermeiden, wenn der Laser 6, wie bei der Ausführungsform gemäß Fig. 5, hinter dem Schirm 9 angeordnet wird. Durch eine kleine Öffnung 17 im Schirm 9 beleuchtet der Laser 6 den Spiegel 7 auf dem Radar-Sensor 3.

Der Bereich um die Öffnung 17 im Schirm 9 kann für Einstellarbeiten nicht genutzt werden. Fällt der reflektierte Strahl in den Bereich der Öffnung 17, so muß die Winkellage des Radar-Sensors 3 so verstellt werden, daß der Laserfleck auf dem Schirm 9 direkt neben der Öffnung 17 liegt. Der daraus resultierende Einstellfehler ist vernachlässigbar.

Diese geringe Einstellungenauigkeit ist vermeidbar. In einer weiteren bevorzugten Ausführungsform (siehe Fig. 6) befindet sich im Strahlengang vor dem Schirm 9 ein Strahlteiler 18. Der Laser 6 ist hinter dem Strahlteiler 18 angeordnet. Der Laserstrahl passiert den Strahlteiler 18 und wird am Spiegel 7 reflektiert. Am Strahlteiler 18 wird er erneut reflektiert und fällt auf den Schirm 9. Gegenüber der einfachen Ausführungsform ist der Schirm 9 um 90° gedreht angeordnet.

Diese Ausführungsform ist besonders für eine automatisch gesteuerte Einstellung geeignet, bei der eine Kamera das Schirmbild aufzeichnet. Der Abstand g ergibt sich aus der Streckensumme vom Spiegel 7 bis Punkt $a_0$ (entlang Achse $a_0$-$a_2$) und der lotrechten Strecke zum Schirm 9 (entlang der Achse $a_1'$-$a_2'$).

Aufgrund der Tatsache, daß der reflektierte Laserstrahl mit dem doppelten Winkel ($2\gamma_i$) auf den Schirm fällt, weist das erfindungsgemäße Verfahren eine hohe Empfindlichkeit auf.

Der Sendekopf des Radar-Sensors 3 kann zur Realisierung des Spiegels 7 mit einer spiegelnden Fläche ausgestattet sein. Die Spiegelfläche muß plan sein und abbildende Eigenschaften aufweisen, d.h. einen ausreichend hohen Reflexionsgrad aufweisen. Neben einer auf einen Spiegelträger aufgedampften Spiegelschicht, eignen sich besonders korrosionsfeste Metallspiegel mit einer polierten Oberfläche. Diese spiegelnde Fläche kann entweder fest auf dem Gehäuse des Sendekopfes montiert sein oder mittels eines aufsteckbaren Trägers für den Zeitraum der Messung am Gehäuse befestigt werden.

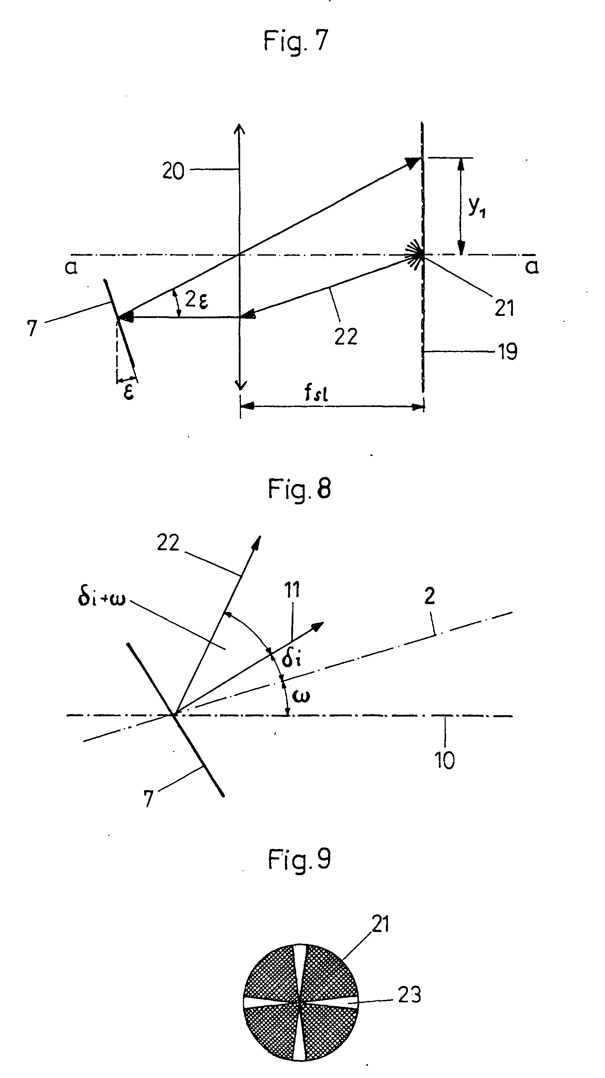

Die in Fig. 7 abgebildete Ausführungsform einer erfindungsgemäßen Vorrichtung umfaßt ein als Sammellinse 20 ausgeführtes Abbildungselement, in dessen Brennebene ein Schirm 19 angeordnet ist. Der Schirm 19 ist lotrecht zur Achse a-a ausgerichtet. Ebenfalls in dem Schirm 19 befindet sich eine beleuchtete Marke 21. Die von der Marke 21 ausgehenden Lichtstrahlen 22 werden infolge der Sammellinse 20 im Unendlichen abgebildet, d.h. nach Durchtritt durch die Sammellinse 20 verlaufen sie parallel zur Achse a-a. Die Beleuchtung ist so zu wählen, daß die ausgehenden Lichtstrahlen 22 in alle Richtungen verlaufen.

Befindet sich ein Spiegel 7 innerhalb dieses parallelen Strahlenbündels, wird ein Teil der Strahlen gemäß dem Reflexionsgesetzes unter dem doppelten Neigungswinkel $\varepsilon$ am Spiegel 7 reflektiert. Der Winkel $\varepsilon$ entspricht dem Winkel zwischen der Normalen 11 und der Achse a-a. Das einfallende Strahlenbündel 22 und das reflektierte Strahlenbündel 22 liegen dabei in einer Ebene mit der Normalen 11 auf dem Spiegel 7. Das am Spiegel reflektierte Bild der Marke 21 wird auf den Schirm 19 an der Position

$$y_i = f_{SL} \cdot \tan(2\varepsilon) \qquad \text{(Gleichung 4)}$$

abgebildet. Der Abstand $y_i$ zwischen der Position des Bildes der Marke 21 auf dem Schirm und der Achse a-a liefert somit die Orientierung des Spiegels 7. In Gleichung 4 hat $f_{SL}$ die Bedeutung der Brennweite der Sammellinse 20.

Bei der Messung sind die horizontale und vertikale Komponente des Abstandes $y_i$ zu berücksichtigen. Dies wird durch den Index i dargestellt. Mit Hilfe der horizontalen Komponente des Abstandes $y_{hor}$ wird der Seitenwinkel und mit der vertikalen Komponente des Abstandes $y_{ver}$ der Höhenwinkel des Radar-Sensors 3 eingestellt.

Wie in Fig. 8 dargestellt, fällt der Lichtstrahl 22 unter der $\delta_i +\omega$ zur Normalen 11 auf die Spiegeloberfläche. Unter dem gleichen Winkel wird der Lichtstrahl 22 reflektiert und trifft entsprechend Gleichung 1 im Punkt $y_i$ auf den Schirm 19:

$$y_i = f_{SL} \cdot \tan(2(\delta_i + \omega)). \qquad \text{(Gleichung 5)}$$

Diese Beziehung gilt für die Einstellung des horizontalen Seitenwinkels. Für die Einstellung des Höhenwinkels entfällt der Fahrtrichtungswinkel $\omega$. Die Einstellung erfolgt so, daß die Radarachse 5 parallel zur Fahrachse 2 ausgerichtet ist.

Wird eine Achsgeometrie-Meßanlage in Verbindung mit der erfindungsgemäßen Vorrichtung eingesetzt, ist Voraussetzung, daß die Vorrichtung zur Achsgeometrie-Meßanlage kalibriert ist. Die Winkellage der Fahrachse 2 muß in jedem Fall auf die Vorrichtung bezogen sein. Im folgenden wird vorausgesetzt, daß die Prüfstandsachse 10 (siehe Fig. 8) der Achsgeometrie-Meßanlage zur Achse a-a der Vorrichtung fluchtet. Ist die Fluchtung nicht gegeben, so ist ein Korrekturwinkel einzuführen, der den Versatz zwischen Vorrichtung und Achsgeometrie-Meßanlage beschreibt.

Die Marke 21 kann entweder beleuchtete Markenflächen 23 in Form beleuchteter Dreiecke (siehe Fig. 9) aufweisen oder als Fadenkreuz ausgeführt werden.

Das Verfahren basiert auf dem Prinzip des Autokollimationsfernrohres (AKF). Die Unterschiede zu einem herkömmlichen AKF bestehen in der größeren Blendenzahl der beschriebenen Anwendung. Bei der vorgeschlagenen Vorrichtung fällt die Blendenzahl wesentlich größer aus, d.h. typische Werte für den Linsendurchmesser betragen etwa 150 mm bei einer Brennweite von 450 mm. Im Gegensatz zu einem herkömmlichen AKF, bei dem die Spiegelfläche mindestens die Größe der Sammellinse aufweist, fällt bei der vorliegenden Ausführung die Spiegelfläche wesentlich kleiner aus. Dies hat nur einen Einfluß auf die reflektierte Lichtmenge. Zweckmäßigerweise ist die Helligkeit der Lichtquelle zur Beleuchtung der Marke 21 regelbar. Die Lichtmenge, die von einer 10 x 10 mm$^2$ Spiegelfläche reflektiert wird, reicht schon für Einstellarbeiten aus.

Der Erfassungsbereich der Vorrichtung liegt (bei kleinem Neigungswinkel der Spiegelfläche) ungefähr im Bereich der Linsenfläche. Dies bedeutet, daß die Vorrichtung nicht besonders exakt vor dem Sendekopf positioniert zu werden braucht.

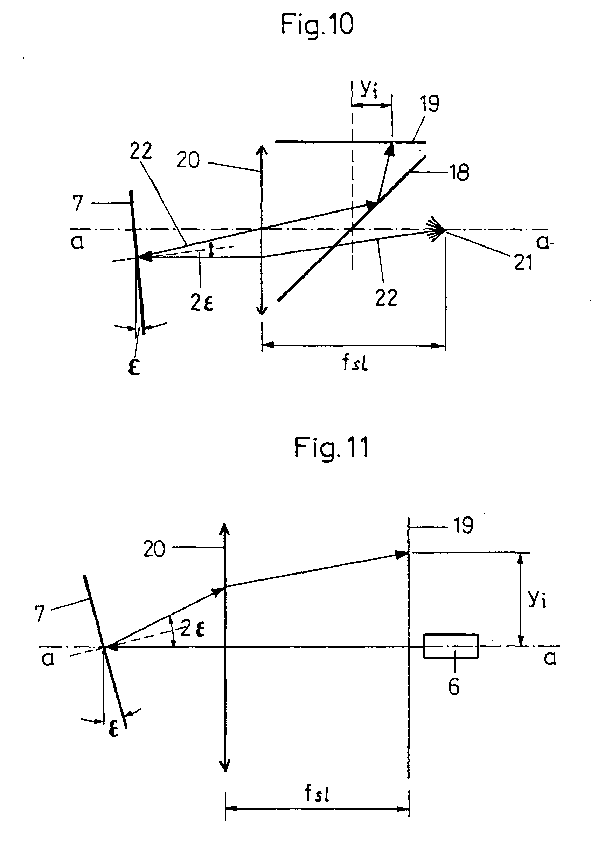

Das in Fig. 7 dargestellte Meßprinzip ist für den praktischen Gebrauch nur bedingt geeignet, da Schirm 19 und Marke 21 räumlich nicht voneinander getrennt angeordnet sind. Die Einführung eines Strahlteilers 18 behebt diesen Mangel (Fig. 10). Zwischen der beleuchteten Marke 21 und der Sammellinse 20 ist der Strahlteiler 18 angeordnet. Die Lichtstrahlen 22 der Marke 21 passieren den Strahlteiler 18 vorzugsweise ungehindert. Die von dem Spiegel 7 reflektierten Lichtstrahlen 22 werden an dem Strahlteiler 18 zumindest teilweise reflektiert. Der Strahlteiler 18 ist so angeordnet, daß die Lichtstrahlen 22 auf den um 90° versetzten Schirm 19 treffen. Der Strahlteiler 18 trennt aus- und eingehende Lichtstrahlen 22. Der Schirm 19 befindet sich wiederum in der Brennebene der Sammellinse 20.

Die Kombination der vorgenannten Ausführungsformen einer erfindungsgemäßen Vorrichtung führt zu einer Vorrichtung, mit der die Winkellage des Sendekopfes unabhängig vom Abstand g vermessen werden kann.

In Fig. 11 ist die prinzipielle Anordnung dargestellt. Ein von einem Laser 6 ausgehender Laserstrahl trifft auf den Spiegel 7 des Sendekopfes. Zwischen Laser 6 und Spiegel 7 ist eine Sammellinse 20 angeordnet, die so ausgerichtet ist, daß der Laserstrahl durch den Mittelpunkt der Sammellinse 20 hindurch tritt und daher nicht gebrochen wird. Auf der Spiegelfläche des Spiegels 7 wird der Laserstrahl unter dem Winkel $2\varepsilon$ reflektiert. An den Flächen der Sammellinse 20 wird der reflektierte Laserstrahl gebrochen und trifft auf den Schirm 19. Der Schirm 19 befindet sich in der Brennebene $f_{SL}$ der Sammellinse 20. Der Laserstrahl wird durch die Sammellinse 20 so gebrochen, daß der Laserstrahl den Schirm an der Position

$$y_i = f_{SL} \cdot \tan(2\varepsilon) \qquad \text{(Gleichung 6)}$$

trifft.

Durch die Einführung eines Strahlteilers 18 zwischen Sammellinse 20 und deren Brennebene lassen sich aus- und eingehende Strahlen räumlich entkoppeln, wie im voranstehenden bereits beschrieben.

Das vorgenannte Vorrichtung weist den Vorteil auf, daß das Meßverfahren unabhängig von der Entfernung zwischen Radar-Sensor 3 und Meßebene, d.h. unabhängig von dem Abstand g ist. Es wird lediglich die Winkellage des Sendekopfes bzgl. der Meßebene erfaßt. Im Gegensatz zu den Vorrichtungen gemäß Fig. 7 und Fig. 10 muß die Vorrichtung genau vor dem Spiegel 7 des Sendekopfes ausgerichtet werden. Einen Erfassungsbereich wie im Zusammenhang mit Fig. 7 und Fig. 10 beschrieben gibt es nicht.

**BEZUGSZEICHENLISTE**

| | |
|---|---|
| 1 | Kraftfahrzeug |
| 2 | Fahrachse |
| 3 | Radar-Sensor |
| 4 | Sendekeule |
| 5 | Radarachse |
| 6 | Laser |
| 7 | Spiegel |
| 8 | Laserstrahl |
| 9 | Schirm |
| 10 | Prüfstandsachse |
| 11 | Normale auf dem Spiegel 7 |
| 12 | Horizontale Skala |
| 13 | Vertikale Skala |
| 14 | Sollposition |
| 15 | Einstellrichtung |
| 16 | Istposition |
| 17 | Öffnung |
| 18 | Strahlteiler |
| 19 | Schirm |
| 20 | Sammellinse |
| 21 | Beleuchtete Marke |
| 22 | Lichtstrahl |
| 23 | Beleuchtete Markenfläche |
| a-a | Laserachse |
| $\delta_i$ | Korrekturwinkel |
| $\omega$ | Fahrtrichtungswinkel |
| g | Abstand zwischen Spiegel und Meßebene |
| $\varepsilon$ | Winkel zwischen der Normalen 11 und der Achse a-a |

**Patentansprüche**

1. Vorrichtung zur Justierung eines Abstandsmeßgeräts, das in dem Vorderwagen eines Kraftfahrzeuges montiert ist und das von einem von ihm umfaßten Sendekopf ausgesendete und an Objekten im Bereich vor dem Kraftfahrzeug zumindest teilweise reflektierte elektromagnetische Wellen zur Abstandsmessung detektieren kann, umfassend optische Meßmittel, die die Ausrichtung des Sendekopfs bezüglich der Fahrachse (2) des Kraftfahrzeuges (1) erfassen können, sowie Einstellmittel, die die Ausrichtung des Sendekopfes bezüglich der Fahrachse des Kraftfahrzeuges verändern können, **dadurch gekennzeichnet, daß** die optischen Meßmittel eine zumindest teilweise reflektierende Fläche (7) des Abstandsmeßgeräts (3), eine Lichtquelle (6; 21), deren Licht (8; 22) auf die zumindest teilweise reflektierende Fläche (7) gerichtet werden kann, und ein Anzeigeelement (9; 19), auf dem das von der Lichtquelle (6; 21) ausgesandte und von der zumindest teilweise reflektierenden Fläche (7) reflektierte Licht (8; 22) erfaßt werden kann, um die Ausrichtung des Sendekopfs bezüglich der Fahrachse (2) des Kraftfahrzeuges (1) erfassen zu können, umfassen:

2. Vorrichtung nach Anspruch 1, **dadurch gekennzeichnet, daß** die optischen Meßmittel weiterhin eine vorzugsweise als Kamera ausgeführte Erfassungseinheit umfassen, die entweder das Abbild des beispielsweise als Schirm (9, 19) ausgestalteten Anzeigeelements oder aber das von der Lichtquelle (6; 21) ausgesandte und von der zumindest teilweise reflektierenden Fläche (7) reflektierte Licht (8; 22) erfassen kann.

3. Vorrichtung nach Anspruch 2, **dadurch gekennzeichnet, daß** die Erfassungseinheit mit einem Bildverarbeitungssystem verbunden ist.

4. Vorrichtung nach einem der Ansprüche 1 bis 3, **dadurch gekennzeichnet, daß** als Lichtquelle ein Laser (6) Verwendung findet.

5. Vorrichtung nach Anspruch 4, **dadurch gekennzeichnet, daß** der Laser (6) auf der von der zumindest teilweise reflektierenden Fläche (7) abgewandten Seite des Schirms (9) angeordnet ist, wobei das beispielsweise als Schirm (9; 19) ausgestaltete Anzeigeelement eine Öffnung (17) aufweist, durch die der von dem Laser (6) ausgehende Strahl in Richtung auf die zumindest teilweise reflektierenden Fläche (7) hindurch treten kann.

6. Vorrichtung nach einem der Ansprüche 1 bis 3, **dadurch gekennzeichnet, daß** als Lichtquelle eine beleuchtete Marke (21) Verwendung findet.

7. Vorrichtung nach einem der Ansprüche 1 bis 6, **dadurch gekennzeichnet, daß** die Vorrichtung einen Strahlteiler (18) umfaßt, durch den das von der Lichtquelle (6; 21) ausgehende Licht auf seinem Weg zu der zumindest teilweise reflektierenden Fläche (7) zumindest teilweise hindurch treten kann, wobei das von dieser Fläche (7) reflektierte Licht (8; 22) von dem Strahlteiler (18) zumindest teilweise in Richtung auf das beispielsweise als Schirm (9; 19) ausgestaltete Anzeigeelement und/oder die Erfassungseinheit reflektiert wird.

8. Vorrichtung nach einem der Ansprüche 1 bis 7, **dadurch gekennzeichnet, daß** die Vorrichtung ein Abbildungselement (20) umfaßt, durch das das von der Lichtquelle ausgehende Licht vor und/oder nach der Reflexion an der zumindest teilweise reflektierenden Fläche (7) hindurch tritt.

9. Vorrichtung nach Anspruch 8, **dadurch gekennzeichnet, daß** das Abbildungselement als Sammellinse (20) aufgeführt ist.

10. Vorrichtung nach Anspruch 9, **dadurch gekennzeichnet, daß** das beispielsweise als Schirm (9; 19) ausgestaltete Anzeigeelement oder die Erfassungseinheit in der von der zumindest teilweise reflektierenden Fläche (7) abgewandten Brennebene der Sammellinse (20) angeordnet sind.

11. Vorrichtung nach Anspruch 10, **dadurch gekennzeichnet, daß** das beispielsweise als Schirm (9; 19) ausgestaltete Anzeigeelement oder die Erfassungseinheit senkrecht zu der optischen Achse der Sammellinse (20) oder eines optischen Systems aus Sammellinse (20) und Strahlteiler (18) angeordnet sind.

12. Vorrichtung nach einem der Ansprüche 1 bis 11, **dadurch gekennzeichnet, daß** die zumindest teilweise reflektierenden Fläche (7) an dem Sendekopf angeordnet ist.

13. Verfahren zur Justierung eines Abstandsmeßgeräts mit einer Vorrichtung nach einem der Ansprüche 1 bis 12, **gekennzeichnet durch** folgende Verfahrensschritte:

- die Lage eines der optimalen Justierung des Abstandsmeßgeräts entsprechenden Auftreffpunktes (14) des von der Lichtquelle (6; 21) ausgehenden und von der zumindest teilweise reflektierenden Fläche (7) reflektierten Lichts (8, 22) in einer vorzugsweise **durch** das Anzeigeelement (9; 19) gegebenen Meßebene wird berechnet;
- der tatsächliche Auftreffpunkt (16) des von der Lichtquelle (6; 21) ausgehenden und von der zumindest teilweise reflektierenden Fläche (7) reflektierten Lichts (8; 22) in der vorzugsweise **durch** das Anzeigeelement (9, 19) gegebenen Meßebene wird ermittelt;
- entsprechend der Abweichung von tatsächlichem Auftreffpunkt (16) zu der optimalen Justierung des Abstandsmeßgeräts entsprechendem Auftreffpunkt (14) werden die Einstellmittel zur Verkleinerung der Abweichung betätigt, bis diese Abweichung den gewünschten Anforderungen genügt.

14. Verfahren nach Anspruch 13, **dadurch gekennzeichnet, daß** in die Berechnung des der optimalen Justierung des Abstandsmeßgeräts entsprechenden Auftreffpunktes (14) ein zuvor ermittelter Korrekturwinkel ($\delta_l$) verwendet wird, der dem Winkel zwischen der Normalen (11) auf der zumindest teilweise reflektierenden Fläche (7) und der Achse (5) der Abstrahlrichtung des Sendekopfes entspricht.

15. Verfahren nach Anspruch 13 oder 14, **dadurch gekennzeichnet, daß** in die Berechnung des der optimalen Justierung des Abstandsmeßgeräts entsprechenden Auftreffpunktes (14) ein zuvor ermittelter Fahrtrichtungswinkel (ω) eingeht, der dem Winkel zwischen der tatsächlichen Fahrachse (2) des Kraftfahrzeugs (1) und einer Sollrichtung der Fahrachse (2) des Kraftfahrzeugs (1) innerhalb der Vorrichtung nach einem der Ansprüche 1 bis 12 entspricht, wobei diese Sollrichtung vorzugsweise durch die Richtung gegeben ist, aus der das von der Lichtquelle (6; 21) ausgehende Licht auf die zumindest teilweise reflektierenden Fläche (7) auftrifft.

**Claims**

1.  Device for adjusting a ranging system which is mounted in the front body of a motor vehicle and which can detect for ranging purposes the electromagnetic waves that are emitted by a transmitting head surrounding it and are at least partially reflected at objects in the region in front of the motor vehicle, comprising optical measuring means which can measure the alignment of the transmitting head with reference to the travel axis (2) of the motor vehicle (1), and setting means which can vary the alignment of the transmitting head with reference to the travel axis of the motor vehicle, **characterized in that** the optical measuring means comprise an at least partially reflecting surface (7) of the ranging system (3), a light source (6; 21) whose light (8; 22) can be directed onto the at least partially reflecting surface (7), and a display element (9; 19) on which the light (8; 22) emitted by the light source (6; 21) and reflected by the at least partially reflecting surface (7) can be recorded in order to be able to measure the alignment of the transmitting head with reference to the travel axis (2) of the motor vehicle (1).

2.  Device according to Claim 1, **characterized in that** the optical measuring means further comprise a recording unit, preferably designed as a camera, which can record either the image of the display element, configured as a screen (9, 19) for example, or else the light (8; 22) emitted by the light source (6; 21) and reflected by the at least partially reflecting surface (7).

3.  Device according to Claim 2, **characterized in that** the recording unit is connected to an image processing system.

4.  Device according to one of Claims 1 to 3, **characterized in that** a laser (6) is used as light source.

5.  Device according to Claim 4, **characterized in that** the laser (6) is arranged on that side of the screen (9) which is averted from the at least partially reflecting surface (7), the display element configured as a screen (9; 19), for example, having an opening (17) through which the beam emitted by the laser (6) can pass in the direction of the at least partially reflecting surface (7).

6.  Device according to one of Claims 1 to 3, **characterized in that** an illuminated mark (21) is used as light source.

7.  Device according to one of Claims 1 to 6, **characterized in that** the device comprises a beam splitter (18) through which the light emanating from the light source (6; 21) can pass at least partially on its way to the at least partially reflecting surface (7), the light (8; 22) reflected by this surface (7) being reflected by the beam splitter (18) at least partially in the direction of the display element configured as a screen (9; 19), for example and/or of the recording unit.

8.  Device according to one of Claims 1 to 7, **characterized in that** the device comprises an imaging element (20) through which the light emanating from the light source passes before and/or after reflection at the at least partially reflecting surface (7).

9.  Device according to Claim 8, **characterized in that** the imaging element is embodied as a positive lens (20).

10. Device according to Claim 9, **characterized in that** the display element configured as a screen (9; 19), for example, or the recording unit is arranged in the focal plane, averted from the at least partially reflecting surface (7), of the positive lens (20).

11. Device according to Claim 10, **characterized in that** the display element configured as a screen (9; 19), for example, or the recording unit is arranged perpendicular to the optical axis of the positive lens (20) or of an optical system composed of the positive lens (20) and beam splitter (18).

12. Device according to one of Claims 1 to 11, **characterized in that** the at least partially reflecting surface (7) is arranged on the transmitting head.

**13.** Method for adjusting a ranging system having a device according to one of Claims 1 to 12, **characterized by** the following method steps:

- the position of a point of impingement (14), corresponding to the optimum adjustment of the ranging system, of the light beam (8; 22) emanating from the light source (6; 21) and reflected by the at least partially reflecting surface (7) is calculated in a measuring plane preferably defined by the display element (9; 19);
- the actual point of impingement (16) of the light beam (8; 22) emanating from the light source (6; 21) and reflected by the at least partially reflecting surface (7) in the measuring plane preferably defined by the display element (9; 19) is determined; and
- in accordance with the deviation of the actual point of impingement (16) from the point of impingement (14) corresponding to the optimum adjustment of the ranging system, the setting means are actuated in order to reduce the deviation until this deviation satisfies the desired requirements.

**14.** Method according to Claim 13, **characterized in that** use is made in the calculation of the point of impingement (14) corresponding to the optimum adjustment of the ranging system of a previously determined correction angle ($\delta_1$) which corresponds to the angle between the normal (11) to the at least partially reflecting surface (7) and the axis (5) of the direction of emission of the transmitting head.

**15.** Method according to Claim 13 or 14, **characterized in that** featuring in the calculation of the point of impingement (14) corresponding to the optimum adjustment of the ranging system is a previously determined travel direction angle ($\omega$) which corresponds to the angle between the actual travel axis (2) of the motor vehicle (1) and a desired direction of the travel axis (2) of the motor vehicle (1) inside the device according to one of Claims 1 to 12, this desired direction preferably being defined by the direction from which the light emanating from the light source (6; 21) impinges on the at least partially reflecting surface (7).

**Revendications**

**1.** Dispositif pour le réglage d'un dispositif pour mesurer des distances, monté dans l'avant-train d'un véhicule à moteur et pouvant détecter, pour la mesure de distance, des ondes électromagnétiques émises par une tête émettrice lui appartenant et réfléchies au moins partiellement par des objets se trouvant dans la région située devant le véhicule à moteur, comprenant des moyens de mesure optiques en mesure d'enregistrer l'alignement de la tête émettrice par rapport à l'axe de déplacement (2) du véhicule à moteur (1), ainsi que des moyens de réglage en mesure de modifier l'alignement de la tête émettrice par rapport à l'axe de déplacement du véhicule à moteur, **caractérisé en ce que** les moyens de mesure optiques englobent une surface (7) au moins partiellement réfléchissante du dispositif pour mesurer des distances (3), une source lumineuse (6 ; 21), dont la lumière (8 ; 22) peut être dirigée vers la surface (7) au moins partiellement réfléchissante, et un élément indicateur (9 ; 19) sur lequel la lumière (8 ; 22) émise par la source lumineuse (6 ; 21) et réfléchie par la surface (7) au moins partiellement réfléchissante peut être reçue, afin de pouvoir enregistrer l'alignement de la tête émettrice par rapport à l'axe de déplacement (2) du véhicule à moteur (1).

**2.** Dispositif selon la revendication 1, **caractérisé en ce que** les moyens de mesure optiques comprennent en outre une unité d'acquisition réalisée de préférence sous la forme d'une caméra, qui peut acquérir soit l'image de l'élément indicateur réalisé par exemple comme un écran (9, 19), ou alors la lumière (8 ; 22) émise par la source lumineuse (6 ; 21) et réfléchie par la surface (7) au moins partiellement réfléchissante.

**3.** Dispositif selon la revendication 2, **caractérisé en ce que** l'unité d'acquisition est reliée à un système de traitement des images.

**4.** Dispositif selon l'une des revendications 1 à 3, **caractérisé en ce que** l'on utilise comme source lumineuse un laser (6).

**5.** Dispositif selon la revendication 4, **caractérisé en ce que** le laser (6) est disposé sur la face de l'écran (9) opposée à la surface (7) au moins partiellement réfléchissante, l'élément indicateur réalisé par exemple comme un écran (9 ; 19) possédant une ouverture (17) par laquelle le rayon sortant du laser (6) en direction de la surface (7) au moins partiellement réfléchissante peut passer.

**6.** Dispositif selon l'une des revendications 1 à 3, **caractérisé en ce que** l'on utilise comme source lumineuse fait appel à un repère éclairé (21).

7. Dispositif selon l'une des revendications 1 à 6, **caractérisé en ce que** le dispositif comprend un séparateur de faisceau (18) que la lumière émise par la source lumineuse (6 ; 21) peut traverser au moins partiellement sur son trajet vers la surface (7) au moins partiellement réfléchissante, la lumière (8 ; 22) réfléchie par cette surface (7) étant réfléchie au moins partiellement par le séparateur de faisceau (18) en direction de l'élément indicateur réalisé par exemple comme un écran (9 ; 19) et/ou de l'unité d'acquisition.

8. Dispositif selon l'une des revendications 1 à 7, **caractérisé en ce que** le dispositif comprend un élément de représentation (20) à travers lequel passe la lumière émise par la source lumineuse avant et/ou après la réflexion sur la surface (7) au moins partiellement réfléchissante.

9. Dispositif selon la revendication 8, **caractérisé en ce que** l'élément de représentation est réalisée comme une lentille convergente (20).

10. Dispositif selon la revendication 9, **caractérisé en ce que** l'élément indicateur réalisé par exemple comme un écran (9 ; 19) ou l'unité d'acquisition est disposé(e) dans le plan focal de la lentille convergente (20) opposé à la surface (7) au moins partiellement réfléchissante.

11. Dispositif selon la revendication 10, **caractérisé en ce que** l'élément indicateur réalisé par exemple comme un écran (9 ; 19) ou l'unité d'acquisition est disposé(e) perpendiculairement à l'axe optique de la lentille convergente (20) ou d'un système optique constitué par la lentille convergente (20) et le séparateur de faisceau (18).

12. Dispositif selon l'une des revendications 1 à 11, **caractérisé en ce que** la surface (7) au moins partiellement réfléchissante est disposée sur la tête d'émission.

13. Méthode pour le réglage d'un dispositif pour mesurer des distances avec un dispositif selon l'une des revendications 1 à 12, **caractérisée par** les étapes du procédé suivantes :

   - calcul de la position d'un point d'impact (14) du faisceau de lumière (8 ; 22) émis par la source lumineuse (6 ; 21) et réfléchi par la surface (7) au moins partiellement réfléchissante dans un plan de mesure déterminé de préférence par l'élément indicateur (9 ; 19), et qui correspond au réglage optimal du dispositif pour mesurer des distances ;
   - détermination du point d'impact réel (16) du faisceau de lumière (8 ; 22) émis par la source lumineuse (6 ; 21) et réfléchi par la surface (7) au moins partiellement réfléchissante dans le plan de mesure déterminé de préférence par l'élément indicateur (9 ; 19) ;
   - en fonction de la déviation du point d'impact réel (16) par rapport au point d'impact (14) correspondant au réglage optimal du dispositif pour mesurer des distances, activation des éléments de réglage pour réduire la déviation, jusqu'à ce que cette déviation réponde aux exigences souhaitées.

14. Méthode selon la revendication 13, **caractérisée en ce qu'**un angle de correction ($\delta_1$), déterminé préalablement et correspondant à l'angle entre la normale (11) à la surface (7) au moins partiellement réfléchissante et l'axe (5) de la direction d'émission du rayonnement par la tête d'émission, est utilisé dans le calcul du point d'impact (14) correspondant au réglage optimal du dispositif pour mesurer des distances.

15. Méthode selon la revendication 13 ou 14, **caractérisée en ce qu'**un angle de la direction de déplacement ($\omega$), déterminé préalablement et qui correspond à l'angle entre l'axe de déplacement (2) réel du véhicule (1) et une direction de consigne de l'axe de déplacement (2) du véhicule (1) dans le dispositif selon l'une des revendications 1 à 12, entre dans le calcul du point d'impact (14) correspondant au réglage optimal du dispositif pour mesurer des distances, cette direction de consigne étant donnée de préférence par la direction depuis laquelle la lumière émise par la source lumineuse (6 ; 21) frappe la surface (7) au moins partiellement réfléchissante.

## Fig.1

## Fig.2

## Fig. 3

Fig. 4

Fig. 5

Fig. 6

Fig. 7

Fig. 8

Fig. 9

## Fig.10

## Fig.11